Europäisches Patentamt

European Patent Office

Office européen des brevets

(11) Publication number: **0 231 065**
**B1**

---

(12) **EUROPEAN PATENT SPECIFICATION**

---

(45) Date of publication of the patent specification:
**12.12.90**

(21) Application number: **87300185.3**

(22) Date of filing: **09.01.87**

(51) Int. Cl.⁵: **F16L 1/22**

---

(54) **Offshore pipelaying.**

---

(30) Priority: **13.01.86 GB 8600670**

(43) Date of publication of application:
**05.08.87 Bulletin 87/32**

(45) Publication of the grant of the patent:
**12.12.90 Bulletin 90/50**

(84) Designated Contracting States:
**DE FR GB NL**

(56) References cited:
**EP-A- 167 036**
**DE-A- 2 618 840**
**DE-A- 2 916 942**
**GB-A- 2 054 090**
**GB-A- 2 138 531**
**US-A- 3 872 680**
**US-A- 4 345 855**

(73) Proprietor: **Aquatic Engineering & Construction Ltd.,**
**Palmerston Centre 29/31 Palmerston Road, Aberdeen**
**Scotland AB1 2QP(GB)**

(72) Inventor: **Tesson, Prosper Anthony, 12 Stoney Hill**
**Terrace, Cove Aberdeen Scotland(GB)**

(74) Representative: **Smith, Norman Ian et al, F.J.**
**CLEVELAND & COMPANY 40-43 Chancery Lane, London**
**WC2A 1JQ(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

**Description**

This invention relates to the laying of pipelines. In particular it relates to the laying of subsea pipelines.

Conventionally subsea pipelines are laid from the deck of a vessel. The deck usually carries a reel on which the pipeline is wound and some means for counteracting the curvature of the pipeline which results from its being wound on the reel. Conventional arrangements for reducing the pipeline curvature have included diverter shoes, straightening shoes and guiding shoes which may or may not be used with a tensioner for controlling the tension in the pipe as it is fed into the sea. Such arrangements have used a relatively large number of elements.

US-A 4345855 describes a pipelaying ship which comprises a reel on which the pipeline is wound, a radius controller, straightener apparatus and a pipe clamping assembly. In operation the pipeline is unspooled from the reel and passes over a radius controller to the straightener assembly which exerts a reverse bending force on the pipeline to overcome the curvature set by the radius controller. For this purpose three reaction points are required to be exerted on the pipe, the two end points acting in one direction and the intermediate point acting in the opposite direction. The pipeline then passes through the pipe clamping assembly from where it is fed onto the seabed.

EP-A 167036 describes a pipelaying system in which pipe is fed from a reel and straightened by passing it over two rollers. The rollers are linked to the reel and can be positioned appropriately according to the discharge point of the pipe from the reel.

An object of the present invention is to provide an apparatus for use in laying a subsea pipeline which is relatively simple in construction.

According to the present invention there is provided apparatus for use in laying pipelines which comprises a reel on which is wound a pipeline, tensioning means arranged to be disposed downstream from said reel and a device for reducing or counteracting the curvature of the pipeline resulting from its being wound on said reel, said device being located between said reel and said tensioning means and said device including roller means mounted so that in use the pipeline passes directly from the reel over the roller means as it travels from said reel to the said tensioning means and is subject to reverse bending about said roller means, the roller means being movable so that it can be positioned appropriately according to the discharge point of the pipeline from the reel, characterised in that said roller means is a single roller which is mounted so that it is movable in a linear direction transverse to its axis.

In use the apparatus will be positioned on the deck or a platform of a vessel with the reel, curvature reducing device, and tensioner spaced axially along the vessel. Preferably the axis of the reel is horizontal and parallel to the axis of the roller. The reel is preferably arranged so that the pipe is discharged from the bottom of the reel. To increase the range of pipe sizes, wall thicknesses, and steel yield strength that can be utilised with the method, the reel can be arranged so as to discharge pipe from the top of the reel, the reverse bending movement being applied by passing the pipe across the bottom of the roller and thence to the tensioner.

The tensioner can be a conventional tensioning means. The roller can be movable from one position to another by hydraulic means.

The invention will be described now by way of example only with particular reference to the accompanying drawings. In the drawings:

Figure I shows a pipeline laying apparatus in accordance with the present invention positioned on the deck of a vessel.

Figure Ia is a schematic plan view of the arrangement shown in Figure I, and

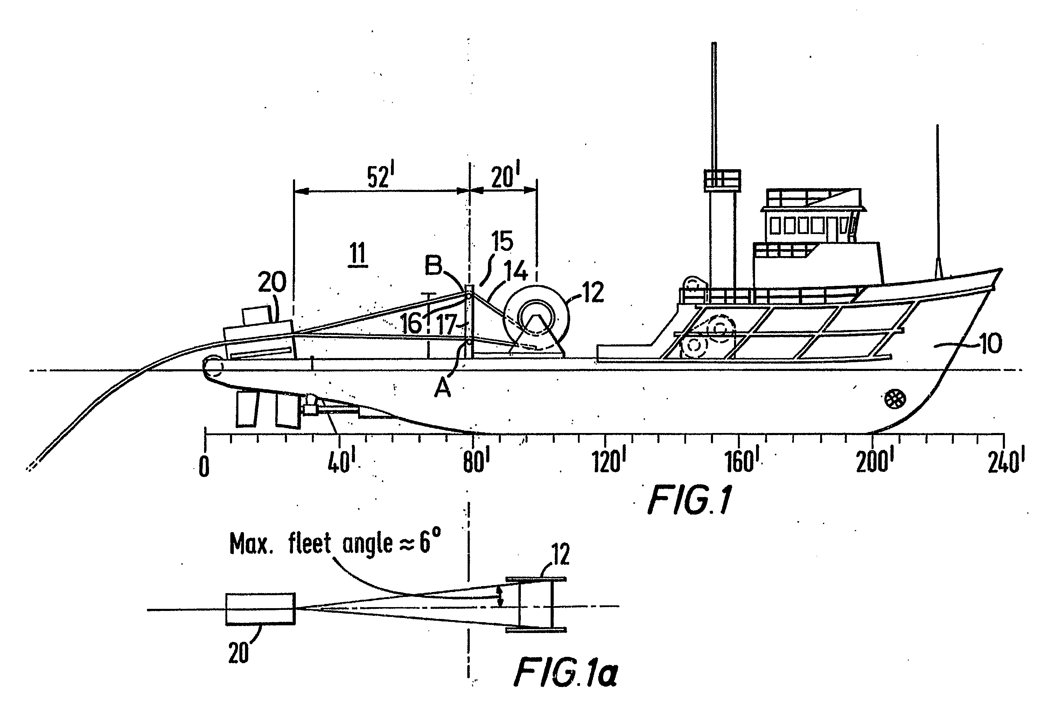

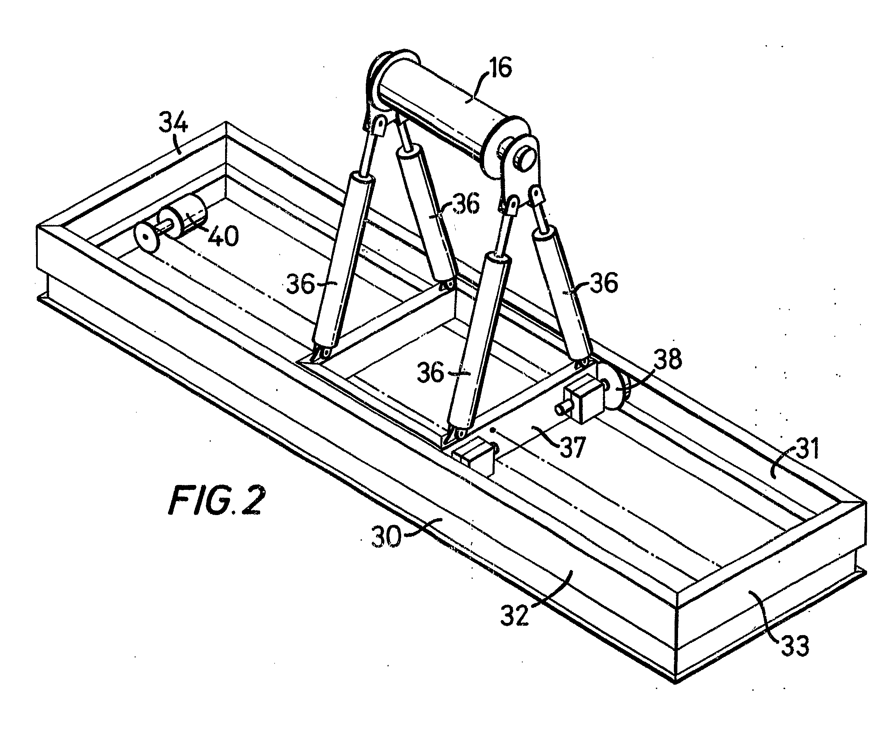

Figure 2 is a perspective view of the part of apparatus of Figure I.

Figure I shows a vessel IO which carries the pipeline laying apparatus II. The apparatus includes a reel I2 on which is wound the pipeline I4. The reel is mounted with its axis horizontal and so that pipeline is discharged from the reel at a lower part thereof. Positioned downstream from the reel is a curvature reducing device I5. This device includes a roller I6 which is mounted between two straight upright posts I7. The position of the roller I6 can be adjusted vertically relative to the posts I7 by hydraulic operation. The position of roller I6 can also be adjusted axially.

Positioned downstream from the curvature reducing device I5 is a tensioner 20. The tensioner is disposed near the point where pipeline is arranged to issue from the vessel into the sea. This tensioner can be a commercially available device and is located in a stationary position centred on the longitudinal axis of the apparatus. The pipe tensioner is arranged to provide a controllable variable value pull on the pipeline so as to ensure that during operation of the apparatus the pipe straightening function is conducted at a controlled tension value. The pipe tensioner can be operated independently. However the usual mode of operation will be linked to that of the reel I2 so that

a) the required constant tension value for the pipeline straightening function is maintained, and

b) the pipe straightening function is isolated from the effect of waves or swells.

In use pipeline to be laid on the sea bed is unwound from the reel I2 and passes over the roller I6. The tensioner operates to maintain a constant tension in the pipeline so that it is subjected to reverse bending as it passes over the roller I6 the effect of which is to eliminate or considerably reduce the curvature of the pipeline which results from its having been wound on the reel I2. It will be seen from the drawing that when the reel is full the roller I6 is located in position A. As the pipeline is unwound the discharge point on the reel varies and the roller I6 is gradually moved by its hydraulic control from the position A towards the position B. This ensures that the roller can function correctly to carry out its curvature reducing operation.

Referring now to figure 2 the curvature reducing device I5 comprises a rectangular steel base frame 30 which is welded to the deck of the vessel I0. The steel base 30 comprises a pair of spaced relatively long limbs 3I,32 and a pair of spaced relatively short limbs 33,34. The roller I6 is rotatably mounted in supports on the end of four pistons which project from hydraulic cylinders 36. The hydraulic cylinders 36 are mounted upon a carriage 37 the carriage having wheels 38 which can run along rails defined on the interior surface of each of the limbs 3I and 32. The carriage 37, and hence the roller I6 can moved longitudinally along the limbs 3I and 32 and drive for this movement is provided by a motor 40 carried by the limb 34.

It will be appreciated that the raising and lowering of the roller I6 is carried out by operating the hydraulic cylinders 36. Preferably this operation is carried out under the control of a central control unit which also controls the motor 40. The motor 40 is operated to move the roller I6 in an axial direction so that the roller is aligned with the axial discharge point of the pipeline from the the reel I2. It will be seen from figure Ia that the axial position on the reel from which the pipeline leaves the reel can vary and the motor 40 is operated to ensure that the roller I6 is at the correct position to receive the pipeline.

## Claims

1. Apparatus for use in laying pipelines which comprises a reel (12) on which is wound a pipeline (14), tensioning means (20) arranged to be disposed downstream from said reel and a device (15) for reducing or counteracting the curvature of the pipeline resulting from its being wound on said reel, said device (15) being located between said reel (12) and said tensioning means (20) and said device (15) including roller means (16) mounted so that in use the pipeline passes directly from the reel over the roller means as it travels from said reel to the said tensioning means and is subject to reverse bending about said roller means, the roller means being movable so that it can be positioned appropriately according to the discharge point of the pipeline from the reel, characterised in that said roller means is a single roller which is mounted so that it is movable in a linear direction transverse to its axis.

2. Apparatus according to claim 1 characterised in that the axis of the reel (12) is horizontal and parallel to the axis of the roller (16).

3. Apparatus according to claim 2 characterised in that the reel (12) is arranged so that the pipe (14) is discharged from the bottom of the reel (12).

4. Apparatus according to claim 2 characterised in that the reel (12) is arranged so that pipe (14) is discharged from the top of the reel.

5. Apparatus according to any preceding claim wherein the roller (16) is movable from one position to another by hydraulic means.

6. Apparatus according to any preceding claim characterised in that the roller (16) is movable laterally with respect to the direction of movement of the pipeline (14).

7. Apparatus according to claim 6 characterised in that the roller (16) can be raised or lowered by hydraulically operable means.

8. Apparatus according to claim 7 characterised in that the roller (16) is carried by a carriage (37) which is movably mounted in a frame (30).

## Patentansprüche

1. Vorrichtung zur Verwendung bei der Verlegung von Rohrleitungen, enthaltend eine Trommel (12), auf die eine Rohrleitung (14) aufgewickelt ist, Spannmittel (20), die nachfolgend zu der Trommel angeordnet sind, und eine Einrichtung (15), welche die Krümmung, die sich aus der Aufwicklung der Rohrleitung auf die Trommel ergibt, verringert oder dieser Krümmung entgegenwirkt und zwischen der Trommel (12) und den Spannmitteln (20) angeordnet ist und Rollenmittel (16) enthält, die derart angebracht sind, daß im Gebrauch die Rohrleitung während ihrer Förderung von der Trommel zu den Spannmitteln direkt über die Rollenmittel läuft und einer umgekehrt gerichteten Biegung um die Rollenmittel unterworfen wird, und derart verstellbar sind, daß sie entsprechend dem Abgangspunkt der Rohrleitung von der Trommel geeignet positioniert werden können, dadurch gekennzeichnet, daß die Rollenmittel von einer einzigen Rolle gebildet sind, die derart angebracht ist, daß sie in gerader Richtung quer zu ihrer Achse verstellbar ist.

2. Vorrichtung nach Anspruch 1, dadurch gekennzeichnet, daß die Achse der Trommel (12) horizontal und parallel zur Achse der Rolle (16) ist.

3. Vorrichtung nach Anspruch 2, dadurch gekennzeichnet, daß die Trommel (12) so angeordnet ist, daß die Rohrleitung (14) an der Unterseite der Trommel (12) abgegeben wird.

4. Vorrichtung nach Anspruch 2, dadurch gekennzeichnet, daß die Trommel (12) so angeordnet ist, daß die Rohrleitung (14) an der Oberseite der Trommel (12) abgegeben wird.

5. Vorrichtung nach einem der vorstehenden Ansprüche, dadurch gekennzeichnet, daß die Rolle (16) durch hydraulische Mittel von einer Stellung zur anderen verstellbar ist.

6. Vorrichtung nach einem der vorstehenden Ansprüche, dadurch gekennzeichnet, daß die Rolle (16) seitlich in Bezug auf die Bewegungsrichtung der Rohrleitung (14) verstellbar ist.

7. Vorrichtung nach Anspruch 6, dadurch gekennzeichnet, daß die Rolle (16) durch hydraulisch betätigbare Mittel angehoben oder abgesenkt werden kann.

8. Vorrichtung nach Anspruch 7, dadurch gekennzeichnet, daß die Rolle (16) an einem Wagen (37) gehalten ist, der beweglich in einem Rahmen (30) angebracht ist.

## Revendications

1. Appareil pour poser des tuyaux comportant un touret (12) sur lequel est enroulé un tuyau (14), un dispositif de tension (20) destiné à être placé en aval du touret et un dispositif (15) destiné à réduire ou à neutraliser la courbure du tuyau due à son enroulement sur le touret, placé entre le touret (12) et le dispositif de tension (20) et comportant un dispositif à rouleau (16) monté de manière à ce qu'en cours .d'utilisation le tuyau passe directement du touret sur le rouleau lors de son déplacement du touret au dispositif de tension, et subisse une flexion inverse sur le dispositif à rouleau, lequel rouleau est mobile de manière à pouvoir être positionné en fonction du point de sortie du tuyau par rapport au touret, caractérisé en ce que ce dispositif à rouleau ne comporte qu'un seul rouleau, monté de manière à être mobile dans une direction linéaire transversale à son axe.

2. Appareil selon la revendication 1, caractérisé en ce que l'axe du touret (12) est horizontal et parallèle à celui du rouleau (16).

3. Appareil selon la revendication 2, caractérisé en ce que le touret (2) est disposé de manière à ce que le tuyau (14) sorte par la base du touret (12).

4. Appareil selon la revendication 2, caractérisé en ce que le touret (12) est disposé de manière à ce que le tuyau (14) sorte par le sommet du touret.

5. Appareil selon l'une quelconque des revendications précédentes, caractérisé en ce que le rouleau (16) peut être déplacé d'une position à une autre par un système hydraulique.

6. Appareil selon l'une des quelconques revendications précédentes, caractérisé en ce que le rouleau (16) peut être déplacé latéralement par rapport au sens de translation du tuyau (14).

7. Appareil selon la revendication 6, caractérisé en ce que le rouleau (16) peut être monté ou descendu par un dispositif à commande hydraulique.

8. Appareil selon la revendication 7, caractérisé en ce que le rouleau (16) est supporté par un chariot (37), monté mobile sur un cadre (30).

**52'**   **20'**

**11**

B

15

14

20

16 17

12

A

10

0   40'   80'   120'   160'   200'   240'

*FIG.1*

Max. fleet angle ≈ 6°

12

20

*FIG.1a*

EP 0 231 065 B1

FIG.2